(19) Europäisches Patentamt
European Patent Office
Office européen des brevets

(11) EP 0 657 668 B1

(12) EUROPÄISCHE PATENTSCHRIFT

(45) Veröffentlichungstag und Bekanntmachung des Hinweises auf die Patenterteilung:
13.03.1996 Patentblatt 1996/11

(51) Int Cl.6: F16H 61/02

(21) Anmeldenummer: 94119027.4

(22) Anmeldetag: 02.12.1994

(54) **Verfahren zur Steuerung der Antriebseinheit von Kraftfahrzeugen**

Controlling method for drive units of motor vehicles

Procédé de commande de groupe propulseur d'automobiles

(84) Benannte Vertragsstaaten:
DE FR GB IT

(30) Priorität: 10.12.1993 DE 4342204

(43) Veröffentlichungstag der Anmeldung:
14.06.1995 Patentblatt 1995/24

(73) Patentinhaber:
• TEMIC TELEFUNKEN microelectronic GmbH
D-74072 Heilbronn (DE)
• AUDI AG
D-85045 Ingolstadt (DE)

(72) Erfinder:
• Genzel, Michael
D-90574 Rosstal (DE)
• Möller, Rodolfo
D-90459 Nürnberg (DE)
• Leicht, Andreas
D-85080 Gaimersheim (DE)
• Tonn, Armin
D-91154 Roth (DE)
• Kuster, Willem
D-85049 Ingolstadt (DE)

(74) Vertreter: Maute, Hans-Jürgen, Dipl.-Ing.
TEMIC TELEFUNKEN microelectronic GmbH
Theresienstrasse 2
D-74072 Heilbronn (DE)

(56) Entgegenhaltungen:
EP-A- 0 406 615        EP-A- 0 471 102
EP-A- 0 537 811        DE-A- 4 136 613

**Beschreibung**

Die Antriebseinheit von Kraftfahrzeugen - der Motor und das damit verbundene Getriebe - wird in zunehmendem Maße Regelungs- und Steuerungsmechanismen unterworfen. Dies soll am Beispiel der Steuerung eines Automatikgetriebes erläutert werden: moderne Automatikgetriebe für Kraftfahrzeuge werden entweder mittels einer Schaltautomatik (der Schaltvorgang erfolgt abhängig von bestimmten Eingangsparametern, beispielsweise der Motordrehzahl) oder stufenlos betrieben (das Getriebe wird so lange verstellt, bis sich die erforderliche Übersetzung eingestellt hat). Die hierfür vorgesehenen Getriebesteuerungen verwenden adaptive Strategien zur optimalen Anpassung der Schaltkennfelder (Schaltautomatik) bzw. Regelkennfelder (stufenlose Getriebe) einerseits an den Fahrertyp ("Langzeitstrategie"), andererseits an die Umwelt ("mittelfristige Strategie": beispielsweise Schlupferkennung, Anhängerfahrt, Bergfahrt) und schließlich an die aktuelle Fahrsituation ("Kurzzeitstrategie": beispielsweise Uberholvorgänge). Mit Hilfe der Langzeitstrategie soll der Motorleistungsbedarf des jeweiligen Fahrers ermittelt werden - beispielsweise muß einem "sportlichen" Fahrer (viele Beschleunigungsvorgänge und Hochgeschwindigkeitsfahrten) im zeitlichen Mittel mehr Motorleistung als einem "ökonomischen" sparsamen Fahrer zur Verfügung gestellt werden. Für die Fahrertyp-Erkennung werden verschiedene Kriterien herangezogen (beispielsweise Fahrpedalstellung, Dauer und Häufigkeit der Kick-down-Betätigung des Fahrpedals, Stellgeschwindigkeit des Fahrpedals) und empirisch bewertet (Versuchsfahrten); nach Filterung über einen längeren Zeitraum wird hieraus ein Zahlenwert gewonnen, der den Fahrertyp charakterisiert. Dokument DE-A- 4 136 613 z.B. zeigt eine solche Steuerung Nachteilig hierbei ist jedoch, daß die Kriterien für die Fahrertyp-Erkennung, deren Bewertung und der Filtervorgang empirisch sind und demzufolge die Ermittlung des Zahlenwerts sehr zeitaufwendig ist. Der derart gewonnene Zahlenwert ist lediglich ein indirektes Maß für den mittleren Motorleistungsbedarf des Fahrers und daher für die Steuerung der Antriebseinheit (Motorsteuerung, Getriebesteuerung) wenig geeignet.

Der Erfindung liegt die Aufgabe zugrunde, ein einfaches Verfahren zur Steuerung der Antriebseinheit von Kraftfahrzeugen anzugeben, das die genannten Nachteile vermeidet und das vorteilhafte Eigenschaften aufweist.

Diese Aufgabe wird erfindungsgemäß durch die Merkmale a) bis h) des Patentanspruchs 1 gelöst.

Vorteilhafte Weiterbildungen des Verfahrens ergeben sich aus den Unteransprüchen.

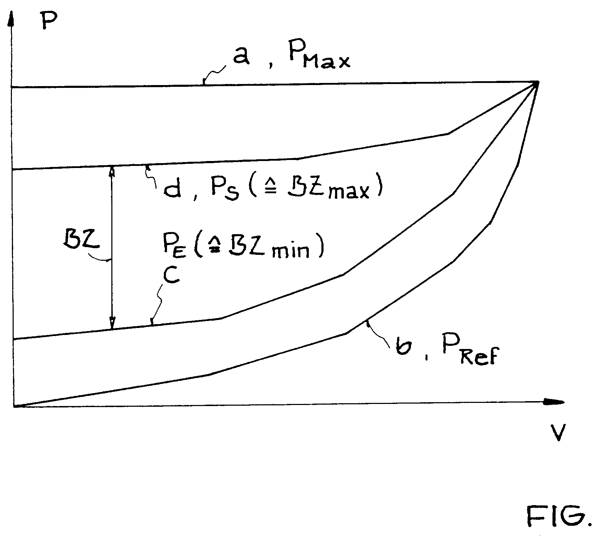

Zur Bestimmung einer aussagekräftigen Bewertungszahl für die Steuerung der Antriebseinheit werden folgende Leistungskurven vorgegeben bzw. ermittelt und gemäß der Figur im Motorleistungs-Geschwindigkeits-Diagramm (P-v-Diagramm) eingetragen:

- Die vom jeweiligen Motor erreichbare (geschwindigkeitsunabhängige) Maximalleistung $P_{max}$ (Kurve a).

- Als minimaler Leistungswert (Grenze zwischen Schubkraft und Zugkraft) die Referenzleistung $P_{ref}$ (Kurve b), die die Abhängigkeit des Fahrwiderstands FW von der Fahrgeschwindigkeit v bei mittlerer Fahrzeugzuladung widerspiegelt ("Fahrwiderstands-Kennlinie"):

$$P_{ref} = FW \cdot v = \frac{\left( A \cdot v + B \cdot v^2 + C \cdot v^3 \right)}{n};$$

A, B, C sind fahrzeugspezifische Parameter, n ist der Getriebewirkungsgrad.

- In Abhängigkeit vom jeweiligen Fahrzeugtyp sowie von Verbrauchs- und Sportlichkeitskriterien werden zwei geschwindigkeitsabhängige Leistungs-Grenzkurven als Kennlinien $P_E$ (Kurve c) und $P_S$ (Kurve d) definiert und zwischen den Kurven $P_{ref}$ (Kurve b) und $P_{max}$ (Kurve a) eingetragen. Die Kurve c der Leistungs-Kennlinie $P_E$ ("Economy") befindet sich etwas oberhalb der Kurve b ($P_{ref}$) und entspricht der "wirtschaftlichen" Fahrweise, ihr wird eine minimale Bewertungszahl $BZ_{min}$ zugeordnet (beispielsweise $BZ_{min} = 0$). Die Kurve d der Leistungs-Kennlinie $P_S$ ("Sportiv") befindet sich etwas unterhalb der Kurve a ($P_{max}$) und entspricht der "sportlichen" Fahrweise, ihr wird eine maximale Bewertungszahl $BZ_{max}$ zugeordnet (beispielsweise $BZ_{max} = 128$). Die Wahl der Werte für $BZ_{max}$ und $BZ_{min}$ bestimmt die Anzahl der möglichen Zwischenwerte für die Bewertungszahl und damit die Genauigkeit der nachfolgenden Auswertungen.

Die aktuelle Motorleistung $P_{Mot}$ wird aus dem aktuellen Motormoment M und der Motordrehzahl bestimmt (das aktuelle Motormoment M kann entweder als direkte Eingangsgröße zur Verfügung stehen oder muß über ein Kennfeld aus Drosselklappenwinkel und Motordrehzahl ermittelt werden). Durch einen Vergleich der (tatsächlichen) aktuellen Motorleistung $P_{Mot}$ mit den beiden Grenzkurven d ($P_S$) und c ($P_E$) wird die momentane, aktuelle Bewertungszahl $BZ_a$ während der Fahrt permanent ermittelt (beispielsweise in Abständen von 5 ms). Hierzu können zwischen $P_E$ und $P_S$ eine oder mehrere Hilfskennlinien als Stützkurven gelegt werden, die jeweils eine bestimmte Fahrweise charakterisieren; die aktuelle Bewertungszahl $BZ_a$ kann dann durch Interpolation zwischen geeigneten Hilfskennlinien bestimmt werden. Alternativ dazu kann auch zwischen den beiden Grenzkurven c ($P_E$) und d ($P_S$) ohne Zuhilfenahme von Stützkurven linear interpoliert werden; für die aktuelle Bewertungszahl $BZ_a$ ergibt sich in diesem Falle:

$$BZ_a = \frac{BZ_{max} \cdot (P_{Mot} - P_E)}{(P_S - P_E)}.$$

Die aktuellen Bewertungszahlen $BZ_a$ werden einer

zeitlichen Filterung unterworfen (beispielsweise über einen Zeitraum von 5 min); hierdurch wird eine gefilterte Bewertungszahl $BZ_f$ gewonnen. Über die Wahl des Filters (Zeitkonstante) läßt sich das zeitliche Verhalten (Änderungsgeschwindigkeit) der Bewertungszahl $BZ_f$ beeinflussen - insbesondere kann durch Vorgabe einer bestimmten Filtercharakteristik die gewünschte Zeitabhängigkeit der Bewertungszahl $BZ_f$ eingestellt werden.

Anhand der gefilterten Bewertungszahl $BZ_f$ werden die Parameter oder Parametersätze (zweidimensionale Kennlinien, dreidimensionale Kennlinienfelder) zur Steuerung der Antriebseinheit ermittelt; beispielsweise wird für die Getriebesteuerung das Schaltkennlinienfeld oder Regelkennlinienfeld ausgewählt und die entsprechende Motordrehzahl oder Getriebeübersetzung vorgegeben. Weiterhin lassen sich mit Hilfe der gefilterten Bewertungszahl $BZ_f$ Aussagen über den Fahrertyp (Langzeitstrategie) gewinnen. Da in die derart gewonnene Bewertungszahl neben der Charakteristik des Fahrertyps auch der erhöhte Leistungsbedarf aufgrund einer Fahrwiderstandserhöhung eingeht - was bisher Teilaufgabe der mittelfristigen Strategie "Umwelt-Erkennung" war -, kann bei einer Zuordnung der Schlupferkennung aus der mittelfristigen Strategie zur Kurzzeitstrategie das Kriterium "Umwelt-Erkennung" bei der Getriebesteuerung entfallen; für die Getriebesteuerung verbleiben demnach nur noch eine modifizierte Langzeitstrategie und Kurzzeitstrategie. Schließlich kann die Bewertungszahl $BZ_f$ auch für ein "elektronisches Gaspedal" Verwendung finden, beispielsweise zur Festlegung der Momentenreserve.

Das vorgestellte Verfahren vereinigt mehrere Vorteile in sich:

- die aktuelle Bewertungszahl $BZ_a$ kann auf einfache Weise ohne großen Applikationsaufwand ermittelt werden

- die gefilterte Bewertungszahl $BZ_f$ ist ein direktes Maß für den Leistungsbedarf des Fahrers und charakterisiert damit den Fahrertyp eindeutig

- durch die Auswahl des Filters kann das Zeitverhalten der Steuerung vorgegeben werden

- bei der Getriebesteuerung kann die mittelfristige Strategie ("Umwelt-Erkennung") entfallen, es sind nur noch zwei Strategien zu berücksichtigen.

In einem Anwendungsbeispiel wird die gefilterte Bewertungszahl $BZ_f$ zur Auswahl des drehzahlabhängigen Kennlinienfelds bei der Getriebesteuerung herangezogen - beispielsweise zur Auswahl des Regelkennlinienfelds bei einem stufenlosen Getriebe CVT. Hierfür wird der maximalen Bewertungszahl $BZ_{max}$ das Regelkennlinienfeld "Sportiv" und der minimalen Bewertungszahl $BZ_{min}$ das Regelkennlinienfeld "Economy" zugeordnet; das jeweils aktuelle Regelkennlinienfeld und damit die Vorgabe der Motordrehzahl wird anhand des Werts der gefilterten Bewertungszahl $BZ_f$ ausgewählt. Die gefilterte Bewertungszahl $BZ_f$ erhält man durch Filterung der aktuellen Bewertungszahlen $BZ_a$; diese Filterung kann beispielsweise beim Wunsch einen eher "wirtschaftlichen" als "sportlichen" Fahrcharakter vorzugeben (möglichst lange im Economy-Bereich E, möglichst kurz im Sportiv-Bereich S) folgendermaßen aussehen: bei einer Zunahme oder beim Gleichbleiben der aktuellen Bewertungszahl $BZ_a$ erfolgt ein exponentieller zeitlicher Anstieg der gefilterten Bewertungszahl $BZ_f$ (und damit ein zuerst langsamer und dann immer schnellerer Übergang des Charakters von "E" nach "S"); bei einer Abnahme der aktuellen Bewertungszahl $BZ_a$ erfolgt nach einer bestimmten Verzögerungszeit ein linearer Abfall der gefilterten Bewertungszahl $BZ_f$ (und damit ein Übergang des Charakters von "S" nach "E").

## Patentansprüche

1. Verfahren zur Steuerung der Antriebseinheit von Kraftfahrzeugen, mit den Verfahrensschritten:

   a) die maximale Motor-Leistungskennlinie ($P_{max}$) wird bestimmt,

   b) als minimale Motor-Leistungskennlinie wird eine Referenz-Leistungskennlinie ($P_{ref}$) durch die Abhängigkeit des Fahrwiderstandswerts von der Fahrzeuggeschwindigkeit bei einer mittleren Zuladung des Kraftfahrzeugs vorgegeben,

   c) oberhalb der Referenz-Leistungskennlinie ($P_{ref}$) wird eine fahrgeschwindigkeitsabhängige erste Leistungskennlinie ($P_E$) definiert und dieser eine minimale Bewertungszahl ($BZ_{min}$) zugeordnet,

   d) zwischen der ersten Leistungskennlinie ($P_E$) und der maximalen Motor-Leistungskennlinie ($P_{max}$) wird eine fahrgeschwindigkeitsabhängige zweite Leistungskennlinie ($P_S$) definiert und dieser eine maximale Bewertungszahl ($BZ_{max}$) zugeordnet,

   e) die aktuelle Motorleistung ($P_{Mot}$) wird bestimmt,

   f) durch Vergleich der aktuellen Motorleistung ($P_{Mot}$) mit der ersten Leistungskennlinie ($P_E$) und der zweiten Leistungskennlinie ($P_S$) wird eine aktuelle Bewertungszahl ($BZ_a$) ermittelt,

   g) die kontinuierlich ermittelten aktuellen Bewertungszahlen ($BZ_a$) werden zeitlich gefiltert und hierdurch gefilterte Bewertungszahlen ($BZ_f$)

gewonnen,

h) anhand der gefilterten Bewertungszahlen ($BZ_f$) werden Parameter oder Parametersätze für die Steuerung der Antriebseinheit ermittelt.

2. Verfahren nach Anspruch 1, dadurch gekennzeichnet, daß als erste Leistungskennlinie eine Economy-Leistungskennlinie ($P_E$) und als zweite Leistungskennlinie eine Sportiv-Leistungskennlinie ($P_S$) in Abhängigkeit vom Fahrzeugtyp, von Verbrauchskriterien und Wirtschaftlichkeitskriterien definiert werden.

3. Verfahren nach Anspruch 1 oder 2, dadurch gekennzeichnet, daß die aktuellen Bewertungszahlen ($BZ_a$) durch Interpolation zwischen der maximalen Bewertungszahl ($BZ_{max}$) und der minimalen Bewertungszahl ($BZ_{min}$) ermittelt werden.

4. Verfahren nach Anspruch 1 oder 2, dadurch gekennzeichnet, daß zwischen der ersten Leistungskennlinie ($P_E$) und der zweiten Leistungskennlinie ($P_S$) mindestens eine weitere Leistungskennlinie definiert wird, und daß die aktuellen Bewertungszahlen ($BZ_a$) unter Verwendung der weiteren Leistungskennlinie(n) ermittelt werden.

5. Verfahren nach einem der Ansprüche 1 bis 4, dadurch gekennzeichnet, daß das Zeitverhalten bei der Filterung der aktuellen Bewertungszahlen ($BZ_a$) abhängig von der gewünschten Fahrcharakteristik (S, E) vorgegeben wird.

6. Verfahren nach einem der Ansprüche 1 bis 5, dadurch gekennzeichnet, daß als Parametersätze für die Steueder Antriebseinheit Kennlinien oder Kennlinienfelder ermittelt werden.

7. Verfahren nach Anspruch 6, dadurch gekennzeichnet, daß für die Getriebesteuerung als Parametersätze motordrehzahlabhängige Kennlinienfelder verwendet werden.

8. Verfahren nach Anspruch 6, dadurch gekennzeichnet, daß für die Getriebesteuerung als Parametersätze getriebeübersetzungsabhängige Kennlinienfelder verwendet werden.

**Claims**

1. Method for controlling the drive unit of motor vehicles, comprising the method steps:

a) the maximum engine power characteristic ($P_{max}$) is determined,

b) a reference power characteristic ($P_{ref}$) is predetermined as the minimum engine power characteristic on the basis of the dependency of the road resistance value on the vehicle speed with an average vehicle kerb weight,

c) a running speed-dependent first power characteristic ($P_E$) is defined above the reference power characteristic ($P_{ref}$), and a minimum rating number ($BZ_{min}$) is associated with this first characteristic,

d) a running-speed dependent second power characteristic ($P_S$) is defined between the first power characteristic ($P_E$) and the maximum engine power characteristic ($P_{max}$), and a maximum rating number ($BZ_{max}$) is associated with this second characteristic,

e) the actual engine power ($P_{Mot}$) is determined,

f) an actual rating number ($BZ_a$) is established by comparing the actual engine power ($P_{Mot}$) with the first power characteristic ($F_E$) and the second power characteristic ($P_s$),

g) the continuously established actual rating numbers ($BZ_a$) are filtered in time and filtered rating numbers ($BZ_f$) are hereby obtained,

h) parameters or sets of parameters for controlling the drive unit are established on the basis of the filtered rating numbers ($BZ_f$).

2. Method according to claim 1, characterised in that an economy power characteristic ($P_E$) is defined as first power characteristic and a sports power characteristic ($P_S$) is defined as second power characteristic in accordance with the vehicle type, consumption criteria and economy criteria.

3. Method according to claim 1 or 2, characterised in that the actual rating numbers ($BZ_a$) are established through an interpolation between the maximum rating number ($BZ_{max}$) and the minimum rating number ($BZ_{min}$).

4. Method according to claim 1 or 2, characterised in that at least one additional power characteristic is defined between the first power characteristic ($P_E$) and the second power characteristic ($P_S$), and that the actual rating numbers ($BZ_a$) are established with the use of the additional power characteristic(s).

5. Method according to any one of claims 1 to 4, characterised in that the time behaviour when filtering the actual rating numbers ($BZ_a$) is predetermined in accordance with the desired running characteristic (S, E).

6. Method according to any one of claims 1 to 5, characterised in that characteristics or families of characteristics are established as sets of parameters for controlling the drive unit.

7. Method according to claim 6, characterised in that engine speed-dependent families of characteristics are used as sets of parameters for the gear control.

8. Method according to claim 6, characterised in that gear ratio-dependent families of characteristics are used as sets of parameters for the gear control.

## Revendications

1. Procédé pour commander le groupe propulseur de véhicules automobiles, comprenant les étapes de procédé suivantes:

   a) la caractéristique de puissance moteur maximale ($P_{max}$) est déterminée,

   b) comme caractéristique de puissance moteur minimale, une caractéristique de puissance de référence ($P_{réf}$) est préfixée par la dépendance de la valeur de résistance à l'avancement de la vitesse du véhicule à une charge moyenne du véhicule automobile,

   c) au-dessus de la caractéristique de puissance de référence ($P_{réf}$), une première caractéristique de puissance fonction de la vitesse ($P_E$) est définie et un chiffre de pondération minimal ($BZ_{min}$) est coordonné à cette première caractéristique,

   d) entre la première caractéristique de puissance ($P_E$) et la caractéristique de puissance moteur maximale ($P_{max}$), est définie une seconde caractéristique de ouissance fonction de la vitesse ($P_S$) et un chiffre de pondération maximal ($BZ_{max}$) est coordonné à cette seconde caractéristique,

   e) la puissance moteur actuelle (Pmot) est déterminée,

   f) un chiffre de pondération actuel ($BZ_a$) est déterminé par comparaison de la puissance moteur actuelle ($P_{mot}$) avec la première caractéristique de puissance ($P_E$) et la seconde caractéristique de puissance ($P_S$),

   g) les chiffres de pondération actuels ($BZ_a$), déterminés en continu, sont filtrés dans le temps, ce qui procure des chiffres de pondération filtrés ($BZ_f$) et

   h) à l'aide des chiffres de pondération filtrés ($BZ_f$), des paramètres ou des jeux de paramètres sont déterminés pour la commande du groupe propulseur.

2. Procédé selon la revendication 1, caractérisé en ce qu'une caractéristique de puissance économique ($P_E$) est définie comme première caractéristique de puissance et une caractéristique de puissance sportive ($P_S$) est définie comme seconde caractéristique de puissance en fonction du type de véhicule, de critères de consommation et de critères d'économie.

3. Procédé selon la revendication 1 ou 2, caractérisé en ce que les chiffres de pondération actuels ($BZ_a$) sont déterminés par interpolation entre le chiffre de pondération maximal ($BZ_{max}$) et le chiffre de pondération minimal ($BZ_{min}$).

4. Procédé selon la revendication 1 ou 2, caractérisé en ce qu'au moins une caractéristique de puissance supplémentaire est définie entre la première caractéristique de puissance ($P_E$) et la seconde caractéristique de puissance ($P_S$), et que les chiffres de pondération actuels ($BZ_a$) sont déterminés avec utilisation de la ou des caractéristiques de puissance supplémentaires.

5. Procédé selon une des revendications 1 à 4, caractérisé en ce que le comportement dans le temps pour le filtrage des chiffres de pondération actuels ($BZ_a$) est préfixé en fonction de la caractéristique de conduite (S, E) désirée.

6. Procédé selon une des revendications 1 à 5, caractérisé en ce que des caractéristiques ou des diagrammes caractéristiques sont déterminés en tant que jeux de paramètres pour la commande du groupe propulseur.

7. Procédé selon la revendication 6, caractérisé en ce que des diagrammes caractéristiques fonction de la vitesse de rotation du moteur sont utilisés en tant que jeux de paramètres pour la commande du changement de vitesse.

8. Procédé selon la revendication 6, caractérisé en ce que des diagrammes caractéristiques fonction du rapport de transmission du changement de vitesse sont utilisés en tant que jeux de paramètres pour la commande du changement de vitesse.

FIG.